# EUROPEAN PATENT APPLICATION

(11) **EP 2 733 420 A2**
(43) Date of publication of application: **21.05.2014**
(21) Application number: 12786333.0
(22) Date of filing: 02.05.2012
(51) Int. Cl.: F22B 37/26

(54) **STEAM SEPARATOR FOR A GAS BOILER**

(30) Priority: 13.05.2011 KR 20110004068 U
(71) Applicant: Kyung Dong Navien Co., Ltd., Pyoungtaek-si, Gyeonggi-do 450-818 (KR)
(72) Inventor: SON, Seung Kil, Bucheon-si Gyeonggi-do 420-030 (KR)
(74) Representative: Habermann, Hruschka & Schnabel
(86) International application number: PCT/KR2012/003415
(87) International publication number: WO 2012/157860

(57) **Abstract**

Disclosed is a steam separator for a gas boiler which increases a contact area between an exhaust channel of a packing and a cone formed on a valve disc of a valve member to improve watertightness when the exhaust channel is in a closed state. The steam separator includes a main body having a water inlet in a lower portion thereof and an outlet at one side of an upper portion thereof, a float moving up or down depending on a change in a level of heating water filling a closed space inside the main body, a packing that is installed in the outlet of the main body and has an exhaust channel formed in the center thereof, and a valve member that is driven in cooperation with upward or downward movement of the float and has a cone opening or closing the exhaust channel formed in the packing.

## Description

### BACKGROUND

### 1. Field of the Invention

The present invention relates to a steam separator for a gas boiler, and more particularly, to a steam separator for a gas boiler which improves watertightness when an exhaust channel is in a closed state, and provides excellent durability and high productivity.

### 2. Discussion of Related Art

In general, bubbles are spontaneously generated in heating water flowing through a heating pipe in a gas boiler having heating and rapid boiling functions.

When the heating water circulates in a state in which air mixed in the heating water is not separated properly, heat transfer is not performed smoothly. Therefore, heat exchange efficiency of the gas boiler is lowered. Further, the air interferes with the heating water flowing through the heating pipe, and obstructs smooth circulation of the heating water, thereby lowering heating performance.

As such, a steam separator for removing the air contained in the heating water is installed on a hot water return pipe connected to a heat exchanger of the gas boiler.

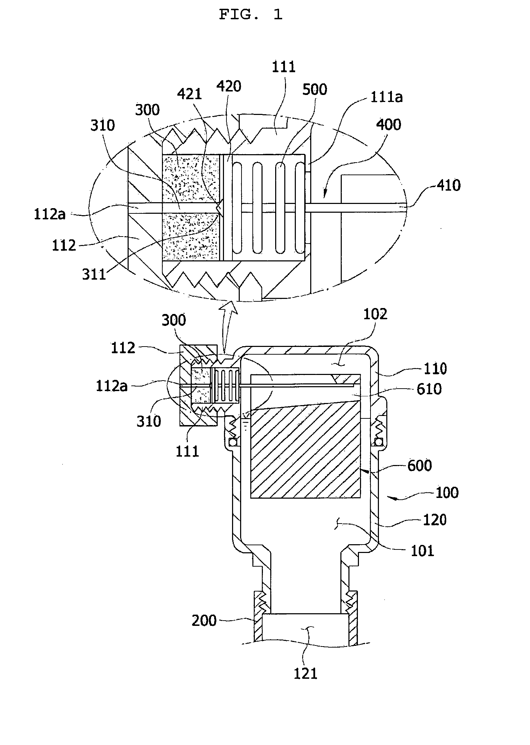

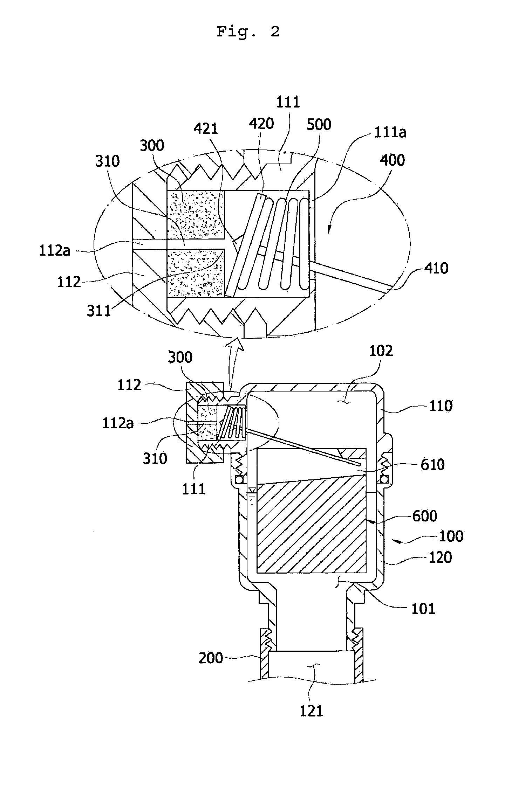

FIG. 1 is a cross-sectional view showing an initial state or an exhausted state of a conventional steam separator for a gas boiler, and FIG. 2 is a cross-sectional view showing how air is exhausted in the conventional steam separator for a gas boiler.

In such a conventional steam separator for a gas boiler, a packing 300 having an exhaust channel 310 is installed in an outlet 111 formed at one side of an upper case 110 of a main body 100, and the exhaust channel 310 of the packing 300 is connected to a discharge hole 112a formed in a cap 112 coupled to an outer side of the outlet 111. The exhaust channel 310 formed in the packing 300 is opened or closed by a cone 421 formed on a valve disc 420 of a valve member 400 that cooperates with a float 600 moving up or down depending on a change in a level of heating water filling a closed space 101 inside the main body 100. The cone 421 is selectively brought into contact with a leading end 311 of the exhaust channel 310, and thereby the exhaust channel 310 is opened or closed.

However, since the leading end 311 of the exhaust channel 310 has a simple cylindrical hole, the leading end 311 is brought into line contact with the cone 421. As such, the conventional steam separator has a problem in that, when the exhaust channel 310 is in a closed state, watertightness is lowered, and there is a possibility of water droplets being discharged.

### SUMMARY OF THE INVENTION

The present invention is directed to a steam separator for a gas boiler which increases a contact area between an exhaust channel of a packing and a cone formed on a valve disc of a valve member to improve watertightness when the exhaust channel is in a closed state, and simultaneously simplifies a structure to improve durability and productivity of the packing.

According to an aspect of the present invention, there is provided a steam separator for a gas boiler, which includes: a main body having a water inlet in a lower portion thereof and an outlet at one side of an upper portion thereof; a float moving up or down depending on a change in a level of heating water filling a closed space inside the main body; a packing that is installed in the outlet of the main body, and has an exhaust channel formed in the center thereof in a width direction; and a valve member that is driven in cooperation with upward or downward movement of the float, and has a cone opening or closing the exhaust channel formed in the packing. The packing has a recess of a predetermined depth which is formed in an inner leading end thereof, is spaced in a radial outward direction of the exhaust channel, and extends in a circumferential direction, and the cone of the valve member is brought into surface contact with a contact zone that is formed between the recess and the exhaust channel and has a predetermined width.

In this case, when the float rises, the cone may be brought into close contact with the contact zone, and a leading end of the contact zone may be widened toward the recess.

Further, the valve member may include a pivotal shaft whose one end is inserted into a fitting groove formed in an upper portion of the float, and a valve disc that is coupled to the other end of the pivotal shaft and has the cone. The valve disc may be supported by an elastic member biased toward the packing.

Further, the float may be subjected to an upward force by the elastic member.

In addition, when the float rises, the valve disc may be brought into close contact with an end face of the packing, and the cone may close the exhaust channel of the packing. When the float falls, the valve disc may rotate about a lower end thereof, and the exhaust channel of the packing may be opened.

In the steam separator for a gas boiler according to the present invention, the recess having a predetermined depth is formed in the leading end of the packing, is spaced in the radial outward direction of the exhaust channel, and extends in the circumferential direction. Thereby, when the exhaust channel is closed, a contact area between the cone and the contact zone formed between the recess and the exhaust channel is increased, so that it is possible to improve watertightness of the exhaust channel.

Further, due to a structure in which the exhaust channel passes through the center of the packing, and the recess is formed around an outer side of the leading end of the exhaust channel, the watertightness of the exhaust channel can be improved, and the packing can be easily produced to increase productivity. Even in long-term use, the leading end of the exhaust channel of the packing coming into contact with the cone is deformed to a minimum, so that durability of the packing can be improved.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a cross-sectional view showing an initial state or an exhausted state of a conventional steam separator for a gas boiler;
FIG. 2 is a cross-sectional view showing how air in the conventional steam separator for a gas boiler is exhausted;
FIG. 3 is a cross-sectional view showing an initial state or an exhausted state of a steam separator for a gas boiler according to an embodiment of the present invention; and
FIG. 4 is a cross-sectional view showing how air in the steam separator for a gas boiler according to the embodiment of the present invention is exhausted.

**** Reference numerals ****

| | | | |
|---|---|---|---|
| 100: | main body | 101: | closed space |
| 102: | air chamber | 110: | upper case |
| 111: | outlet | 111a: | support |
| 111b: | bottom | 112: | cap |
| 112a: | discharge hole | 113: | fastening member |
| 120: | lower case | 121: | water inlet |
| 200: | extension pipe | 300: | packing |
| 310: | exhaust channel | 311: | leading end |
| 320: | recess | 330: | contact zone |
| 400: | valve member | 410: | pivotal shaft |
| 420: | valve disc | 421: | cone |
| 500: | elastic member | 600: | float |
| 610: | fitting groove | | |

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

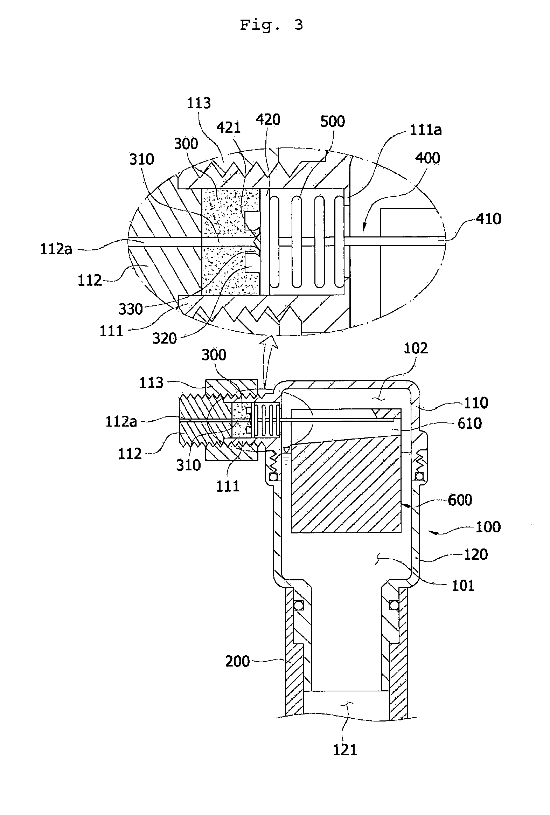

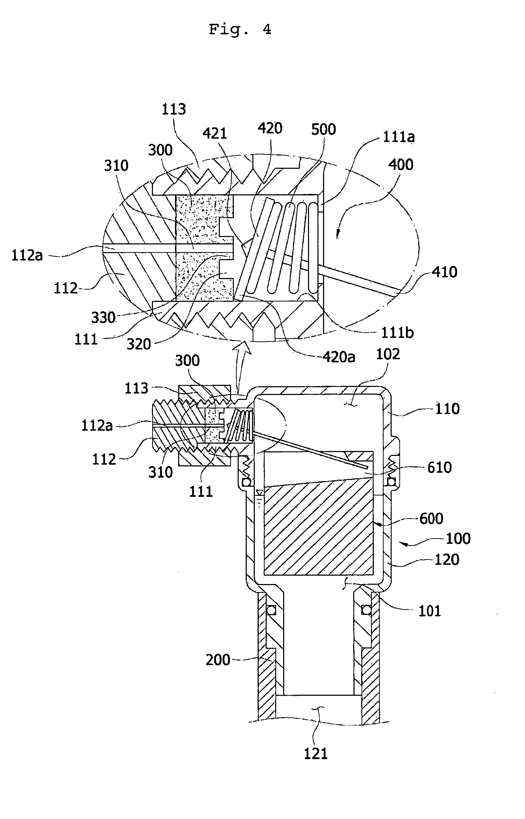

FIG. 3 is a cross-sectional view showing an initial state or an exhausted state of a steam separator for a gas boiler according to an embodiment of the present invention. FIG. 4 is a cross-sectional view showing how air in the steam separator for a gas boiler according to the embodiment of the present invention is exhausted.

In the steam separator for a gas boiler according to the embodiment of the present invention, an upper case 110 that is provided with an outlet 111 at one side thereof and a lower case 120 that is located under the upper case 110 and is provided with a water inlet 121 in a lower portion thereof are coupled with each other, and a main body 100 has a closed space 101 provided therein. The closed space 101 is filled with heating water at a lower portion thereof. Bubbles contained in the heating water come out of the heating water and fill an air chamber 102 located at an upper portion of the closed space 101.

The lower case 120 of the main body 100 is fitted with an extension pipe 200 connected to a hot water return pipe (not shown).

An outer portion of the outlet 111 extending to one side of the upper case 110 of the main body 100 is coupled with a cap 112 by a fastening member 113. The cap 112 is provided with a discharge hole 112a that communicates with the outside so as to discharge air. An inner portion of the outlet 111 is provided with a space into which a packing 300 and an elastic member 500 are inserted.

The packing 300 is formed of a soft synthetic resin, and has an exhaust channel 310 formed in the center thereof in a width direction so as to correspond to the discharge hole 112a of the cap 112. The exhaust channel 310 serves as a passage through which the air filling the air chamber 102 at an upper portion of the main body 100 is discharged to the outside.

A leading end of the packing 300 which is directed toward the closed space 101 is provided with a recess 320 of a predetermined depth which is spaced in a radial outward direction of the exhaust channel 310 and extends in a circumferential direction. A contact zone 330 is formed between the recess 320 and the exhaust channel 310, and comes into close contact with a cone 421 of a valve member 400. The contact zone 330 is preferably formed so as to have a predetermined width in a radial direction. As a result, there is an advantage in that it is possible to prevent a reduction in durability when the contact zone 330 is formed in a pointed shape.

The recess 320 provides an allowance space so that, when the cone 421 is brought into close contact with the contact zone 330 by a rise of a float 600, and thus the exhaust channel 310 of the packing 300 is closed, and a tip of the contact zone 300 is widened toward the recess 320. Thus, surface contact occurs between the cone 421 and the contact zone 330, and the tip of the contact zone 300 widened toward the recess 320 simultaneously applies a compressive force toward the cone 421. Thereby, a close contact force between the cone 421 and the contact zone 330 is increased to improve watertightness.

The valve member 400 is rotated in cooperation with upward or downward movement of the float 600 depending on a change in the level of the heating water filling the closed space 101 of the main body 100, thereby opening or closing the exhaust channel 310 of the packing 300. The valve member 400 is made up of a pivotal shaft 410 whose one end is inserted into a fitting groove 610 of an upper portion of the float 600 and whose other end extends to the inner portion of the outlet 111, a valve disc 420 that is coupled to the other end of the pivotal shaft 410 and is brought into close contact with an inner end face of the packing 300, and the cone 421 that protrudes from the center of an outer face of the valve disc 420 toward the packing 300 and opens or closes the exhaust channel 310 of the packing 300.

The elastic member 500 is disposed inside the valve disc 420 in the inner portion of the outlet 111 so as to surround the pivotal shaft 410. One end of the elastic member 500 is in contact with an inner face of the valve disc 420, and the other end of the elastic member 500 is supported on a support 111a protruding from an inner circumference of an inner end of the outlet 111 toward the center of the outlet 111. Thus, the elastic member 500 is inserted into the outlet 111 under compression.

Therefore, the valve disc 420 is subjected to a force pressed toward the packing 300 by a compressive force of the elastic member 500, and the float 600 connected to one end of the pivotal shaft 410 is subjected to an upward force. When an air pressure in the air chamber 102 of the main body 100 is low, the float 600 moves upward due to a buoyant force caused by the rise of the level of the heating water and an elastic force of the elastic member 500. Afterwards, when the pivotal shaft 410 is flush with the exhaust channel 310, the outer face of the valve disc 420 is brought into close contact with the inner face of the packing 300, and the tip of the exhaust channel 310 is simultaneously closed by the cone 421 formed on the valve disc 420.

In this case, the valve disc 420 is pushed toward the packing 300 by the elastic force of the elastic member 500, and the cone 421 is brought into close contact with the tip of the exhaust channel 310. Simultaneously, the contact zone 330 of the packing 300 is widened toward the recess 320, and thus high watertightness is maintained between the cone 421 and the contact zone 330.

The float 600 is installed in the closed space 101 of the main body 100, and moves up or down depending on a change in the level of the heating water filling the closed space 101, thereby functioning to rotate the pivotal shaft 410 of the valve member 400, one end of which is inserted into the fitting groove 610 at the upper portion of the float 600.

The level of the heating water in the closed space 101 varies depending on the air pressure in the air chamber 102 located above the heating water. When the air pressure of the air chamber 102 is high, the heating water filling the closed space 101 is pushed downward by the air pressure, and the level of the heating water falls.

In this case, as shown in FIG. 4, when the float 600 moves downward, one end of the pivotal shaft 410 inserted into the fitting groove 610 of the upper portion of the float 600 is pulled downward, and the valve disc 420 coupled to the other end of the pivotal shaft 410 rotates about a lower end 420a supported on a bottom 111b of the outlet 111 to move toward the closed space 101, i.e., in a clockwise direction in the figures. The cone 421 is separated from the tip of the exhaust channel 310 of the packing 300, and thus the air in the air chamber 102 is exhausted to the outside through the exhaust channel 310 and the discharge hole 112a.

When the air in the air chamber 102 is exhausted to the outside, and the air pressure in the air chamber 102 is lowered, the level of the heating water in the closed space 101 rises again. In this case, as shown in FIG. 3, the float 600 rises, and the exhaust channel 310 of the packing 300 is closed by the cone 421 of the valve member 400. Accordingly, as described above, the high watertightness is maintained.

## Claims

1. A steam separator for a gas boiler, comprising:
a main body having a water inlet in a lower portion thereof and an outlet at one side of an upper portion thereof;
a float moving up or down depending on a change in a level of heating water filling a closed space inside the main body;
a packing that is installed in the outlet of the main body and has an exhaust channel formed in the center thereof in a width direction; and
a valve member that is driven in cooperation with upward or downward movement of the float and has a cone opening or closing the exhaust channel formed in the packing,
wherein the packing has a recess of a predetermined depth which is formed in an inner leading end thereof, is spaced in a radial outward direction of the exhaust channel, and extends in a circumferential direction, and the cone of the valve member is brought into surface contact with a contact zone that is formed between the recess and the exhaust channel and has a predetermined width.

2. The steam separator of claim 1, wherein, when the float rises, the cone is brought into close contact with the contact zone, and a leading end of the contact zone is widened toward the recess.

3. The steam separator of claim 1 or 2, wherein:
the valve member includes a pivotal shaft whose one end is inserted into a fitting groove formed in an upper portion of the float, and a valve disc that is coupled to the other end of the pivotal shaft and has the cone; and
the valve disc is supported by an elastic member biased toward the packing.

4. The steam separator of claim 3, wherein the float is subjected to an upward force by the elastic member.

5. The steam separator of claim 3, wherein:
when the float rises, the valve disc is brought into close contact with an end face of the packing, and the cone closes the exhaust channel of the packing; and
when the float falls, the valve disc rotates about a lower end thereof, and the exhaust channel of the packing is opened.
